# EUROPEAN PATENT APPLICATION

(11) **EP 0 785 117 A1**
(43) Date of publication of application: **23.07.1997**
(21) Application number: 97300225.6
(22) Date of filing: 15.01.1997
(51) Int. Cl.: B60S 1/34, B21D 39/03

(54) **Improvements relating to wiper arm assemblies**

(30) Priority: 20.01.1996 GB 9601181
(71) Applicant: TRICO PRODUCTS CORPORATION, Buffalo, NY 14203 (US)
(72) Inventor: Dancer, Nigel Paul, Abergavenny, Gwent, NP7 6LZ (GB)
(74) Representative: James, Michael John Gwynne

(57) **Abstract**

A wiper arm assembly incorporates an armpiece (1) and a retainer (2) in which the armpiece is held partly by swaged-over side arms of the retainer (2). There needs to be a further method of retaining the armpiece (1) from sliding movement within the retainer (2) and this is illustrated by a locking formation as shown generally at (4), The locking formation comprises local or foreign material which has been pressed into aligned openings in the armpiece (1) and retainer (2) to lock together these two members.

## Description

A wiper arm assembly forms a linkage between the drive motor and the wiper blade of a windscreen wiper and conventionally comprises two parts, namely a retainer and an armpiece. In the final construction of such a wiper arm assembly it is required that the end of the armpiece should be securely held within the retainer. The tip of the armpiece often provides a mounting for a compression spring which holds the wiper arm down onto the windscreen. Consequently there is a force (provided by the spring) tending to pull the armpiece further into the retainer. Secure fixing of the armpiece is therefore very important.

According to the invention there is provided a wiper arm assembly comprising an armpiece and a retainer, the retainer having side portions which are engaged over one end of the armpiece, and wherein aligned openings are formed in an overlapping region of the armpiece and the retainer with local or foreign material being pressed into the aligned openings to lock together the two members comprising the armpiece and the retainer.

The integration of part of the material of the armpiece with part of the retainer creates a secure interlock between the two members.

In one preferred arrangement the interengagement of the material of the two members has been achieved by a punching operation which distorts the material of one of the members down into the other member and then forces the material of both members outwardly to create locking formations of parts of the one member within the body of the other member.

In an alternative arrangement of the invention the interengagement of the material of the two members has been achieved by forcing a locking pellet down into the two members to form said openings and also to distort the material of one of the members into the material of the other of the members. Preferably the locking pellet has a lower flanged portion which drives into locking engagement with the body of the other of the two members and carries down material of the one member.

Another possibility is to provide that the aligned openings in the two members are preformed to define a single through passageway having a widened mouth at both ends, and a locking pellet having an external shape corresponding to the shape of the single passageway has been forced into the passageway and has then expanded elastically to fill the passageway from top to bottom.

In another preferred arrangement an opening has been preformed through one of the members and part of the material of the other member has been punched partly into the opening in said one member.

The invention may be performed in various ways and a preferred embodiment will now be described, by way of example, with reference to the accompanying drawings, in which:-

Figure 1 is a cross-section showing a general method of interconnection of an armpiece and a retainer of an arm assembly.

Figures 2 to 4 are cross-sections through alternative examples of the general form of interengagement shown in Figure 1.

Figure 5 is a perspective view of a wiper arm assembly incorporating an alternative form of interengagement of an armpiece and retainer.

Figure 6 is a vertical cross-section through Figure 5 and,

Figure 7 illustrates a detail of part of an armpiece shown in Figure 6.

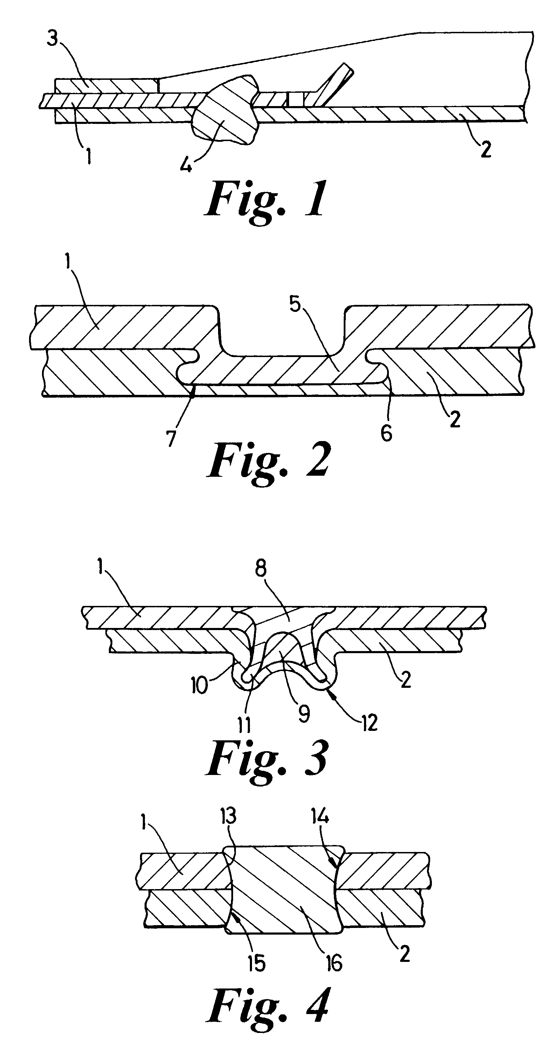

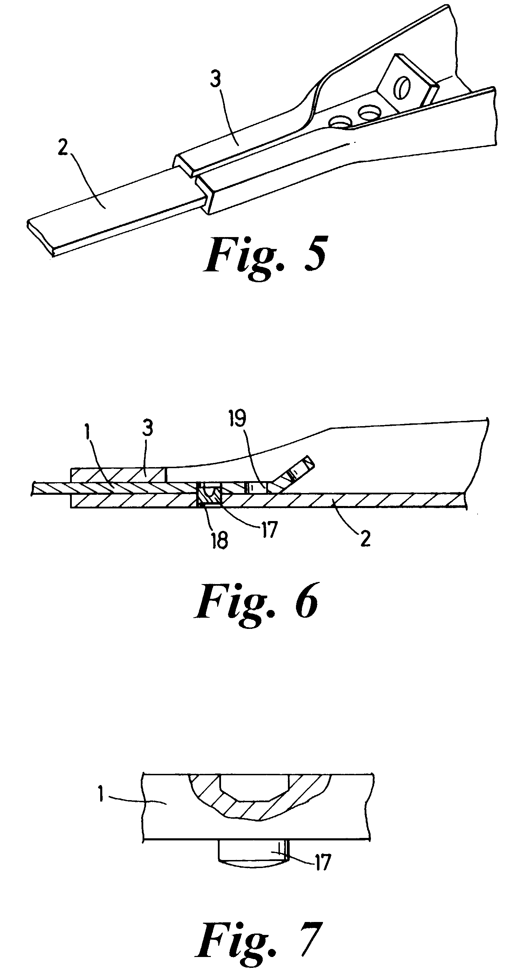

In accordance with this invention the relevant parts of a wipe arm assembly are an armpiece 1 and a retainer 2 in which the armpiece is held partly by swaged-over arms 3 of the retainer 2 (as illustrated for example in Figure 5). There needs to be a further method of retaining the armpiece 1 from sliding movement within the retainer 2 and this is illustrated by a locking formation 4 as shown generally in Figure 1.

One type of formation 4 is illustrated in Figure 2. To create this a special punching tool as used to drive a part 5 of the armpiece 1 down into the body of the retainer 2. A subsequent forming operation of the punching tool then causes the portion 5 and the surrounding portion 6 of the retainer 2 to be spread outwardly to create an integrated locking region 7.

In the arrangement shown in Figure 3 the formation 4 is created by driving a locking pellet 8 of a special form down through the armpiece 1 to cause a part 9 of the armpiece to be driven into a part 10 of the retainer 2, together with a lower flanged portion 11 of the pellet 8. This creates an interlocking stud 12 to hold the armpiece and retainer together.

The armpiece 1 and the retainer 2, as shown in Figure 4, have a passageway 13 driven through them so as to define a widened mouth 14 and 15 at each end. A semi-resilient pellet 16 is then driven into the passageway 13 and expands elastically into the lower mouth 15, to lock the armpiece and retainer together.

In the construction defined in Figures 5 to 7 a punching tool is used to drive a portion 17 of the armpiece 1 into a preformed hole 18 in the retainer 2. During this operation the armpiece 1 is held in the required location by a locating tool situated in a location hole 19 in the armpiece 1. The form of the dimple-like portion 17 can be seen more clearly from Figure 7.

## Claims

1. A wiper arm assembly comprising an armpiece and a retainer, the retainer having side portions which are engaged over one end of the armpiece, and wherein aligned openings are formed in an overlapping region of the armpiece and the retainer with local or foreign material being pressed into the aligned openings to lock together the two members comprising the armpiece and the retainer.

2. A wiper arm assembly according to Claim 1, wherein the interengagement of the material of the two members has been achieved by a punching operation which distorts the material of one of the members down into the other member and then forces the material of both members outwardly to create locking formations of parts of the one member within the body of the other member.

3. A wiper arm assembly according to Claim 1, wherein the interengagement of the material of the two members has been achieved by forcing a locking pellet down into the two members to form said openings and also to distort the material of one of the members into the material of the other of the members.

4. A wiper arm assembly according to Claim 3, wherein the locking pellet has a lower flanged portion which drives into locking engagement with the body of the other of the two members and carries down material of the one member.

5. A wiper arm assembly according to Claim 1, wherein the aligned openings in the two members are preformed to define a single through passageway having a widened mouth at both ends, and a locking pellet having an external shape corresponding to the shape of the single passageway has been forced into the passageway and has then expanded elastically to fill the passageway from top to bottom.

6. A wiper assembly according to Claim 1, wherein an opening has been preformed through one of the members and part of the material of the other member has been punched partly into the opening in said one member.

7. A wiper arm assembly substantially as described herein with reference to the accompanying drawings.

8. Any novel combination of features of a wiper arm assembly as described herein and illustrated in the accompanying drawings.
